# EUROPEAN PATENT APPLICATION

(11) **EP 1 267 118 A1**
(43) Date of publication of application: **18.12.2002**
(21) Application number: 01305157.8
(22) Date of filing: 13.06.2001
(51) Int. Cl.: F21V 8/00

(54) **Display screen and apparatus**

(71) Applicant: Prokia Technology Co., Ltd., Tainan Hsien (TW)
(72) Inventor: Chuang, Fu-Ming, Chu-Tung Chen, Hsin-Chu Hsien (TW)
(74) Representative: Luckhurst, Anthony Henry William

(57) **Abstract**

A display screen includes a screen base (2, 4) having a front side, a rear side, and an array of bores (21, 41) that extend from the rear side to the front side. Each of the bores (21, 41) tapers in a direction from the rear side to the front side. Light that enters the bores (21, 41) from the rear side of the screen base (2, 4) is subjected to multiple total internal reflections as the light propagates along the bores (21, 41) prior to exiting at the front side of the screen base (2, 4). A display apparatus that incorporates the display screen is also disclosed.

## Description

The invention relates to a display screen, more particularly to a display screen which can be used to show high quality and high resolution images that are not adversely influenced by ambient light, and to a display apparatus which incorporates the aforesaid display screen.

A first type of a conventional display apparatus incorporates a projection display screen for showing images thereon. The image quality is generally influenced by the structure of the projection display screen. Properties that are commonly used to define the quality of an image shown on a projection display screen include contrast, brightness, color, and resolution. Contrast is the difference in brightness between the lightest and darkest areas in an image. When the contrast is large, details of the image can be seen more clearly. The projection display screen plays an important role in determining the contrast characteristics of a display apparatus.

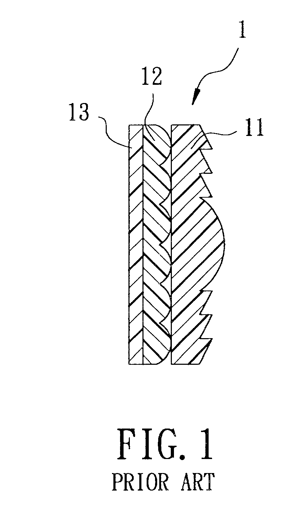

Referring to Figure 1, a conventional back-projection display screen 1 is shown to comprise a Fresnel lens 11, a lenticular lens 12 and a diffuser 13. The Fresnel lens 11 is usually disposed in front of a light source and optical components of the display apparatus, and has a rear surface formed with stepped setbacks and a rounded center so as to possess the optical properties of a much thicker lens. The Fresnel lens 11 enables light rays to be radiated directly toward the viewer. The lenticular lens 12 is disposed immediately in front of the Fresnel lens 11, and has a rear surface formed with convex protrusions for refracting light rays, thereby controlling the angle of unidirectional light divergence, and thus the light-viewing angle. The diffuser 13 is disposed immediately in front of the lenticular lens 12 and is made of a semi-transparent material. The diffuser 13 diverges straight light rays to attain a large light-viewing angle.

As such, light impinging upon the rear side of the projection display screen 1 is refracted by the Fresnel lens 11 in order to obtain forwardly extending parallel light rays. After passing through the Fresnel lens 11, the light rays are subsequently refracted by the lenticular lens 12 so as to obtain forwardly diverging light rays, which are further scattered by the diffuser 13 to achieve an optimum light-viewing angle.

Some of the drawbacks of the aforesaid conventional back-projection display screen 1 are as follows:
1. The light rays are subjected to multiple refraction and reflection and travel different paths while passing through the three layers of the projection display screen 1. During the scattering phase of the light rays, the light rays will interfere with each other, thereby resulting in a speckle effect and in a moiré effect that degrade the quality of the image viewed on the projection display screen 1. Particularly, the speckle effect will give a granular appearance to the image on the projection display screen 1, whereas the moiré effect will result in a new set of periodic patterns at intersections of two or more original sets of periodic patterns of the image.
2. In the conventional projection display screen 1, light intensity is brightest at the central portion, and is gradually diminished in directions toward the outer periphery of the projection display screen 1. This phenomenon arises due to the fact that, because the light rays that reach the outer periphery of the projection display screen 1 are inclined, the effective intensity of the light rays thereat is accordingly smaller. This phenomenon, which is characterized by the cosine θ attenuation of the light intensity distribution, results in an image with uneven brightness throughout the conventional projection display screen 1.
3. Ambient light that is incident on the front side of the conventional projection display screen 1 will be reflected and will adversely affect the contrast of the image shown thereon. In other words, the contrast of the image viewed on the conventional projection display screen 1 is adversely influenced by ambient light conditions.
4. The conventional projection display screen 1 includes three layers having different characteristics and configurations. In addition, the interfaces among the three layers must be carefully designed to ensure a particular path for the light rays that pass through the projection display screen 1. The conventional projection display screen 1 is thus difficult and expensive to manufacture.

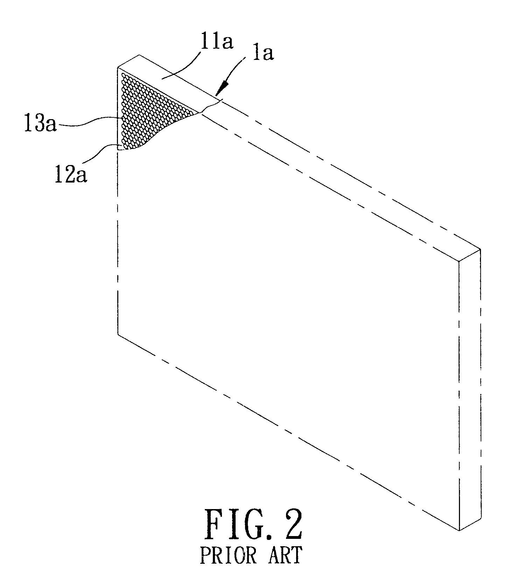

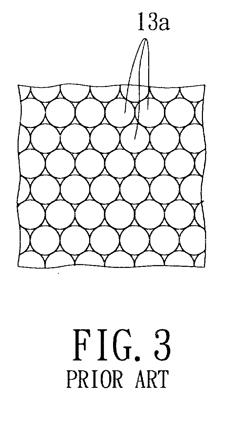

Referring to Figures 2 and 3, a second type of a conventional display apparatus (1a) is shown to include a screen base (11a) and a plurality of light emitting diodes (13a) disposed on a display side (12a) of the screen base (11a). The light emitting diodes (13a) are semiconductor diodes that emit light when an input voltage is applied thereto. By varying the materials used in fabricating the light emitting diodes (13a), the light emitting diodes (13a) can be configured to emit different colors of light. Presently, light emitting diodes (13a) that emit primary colors, i.e. red, green and blue, are widely available in the market.

In the conventional display apparatus (1a) of Figures 2 and 3, every three adjacent ones of the light emitting diodes (13a) emit red, green and blue primary-color light, respectively. The light emitting diodes (13a) thus form densely arranged pixels on the display side (12a) of the screen base (11a).

By selectively activating and deactivating the light emitting diodes (13a), patterns or text can be shown on the screen base (11a). However, because each pixel on the display side (12a) of the screen base (11a) is formed from a cluster of three light emitting diodes (13a), the color, resolution and quality of the image shown on the display side (12a) are relatively poor.

In addition, the brightness of the image shown on the display side (12a) is determined solely by the characteristics of the light emitting diodes (13a) and can hardly be adjusted. Moreover, the angle of view of the conventional display apparatus (1a) cannot be controlled. Particularly, when the conventional display apparatus (1a) is to be installed at a relatively high or relatively low height with respect to the line of sight of the viewer, the angle of view of the conventional display apparatus (1a) will be too high or too low, thereby adversely affecting the quality of the image shown on the display apparatus (1a).

Therefore, one object of the present invention is to provide a display screen which can be used to show high quality and high resolution images that are not adversely influenced by ambient light.

Another object of the present invention is to provide a display screen which is relatively easy and less costly to manufacture.

Still another object of the present invention is to provide a display apparatus in which light from a plurality of light emitting diodes can be mixed by a display screen thereof to form a plurality of point-light sources so as to achieve optimum image resolution.

A further object of the present invention is to provide a display apparatus in which the brightness of point-light sources and the angle of view can be controlled.

According to one aspect of the present invention, a display screen comprises:
a screen base having a front side, a rear side, and an array of bores that extend from the rear side to the front side, each of the bores tapering in a direction from the rear side to the front side; and
reflecting means, disposed in the bores, for subjecting light that enters that extend from the rear side of the screen base to multiple total internal reflections as the light propagates along the bores prior to exiting at the front side of the screen base.

According to another aspect of the present invention, a display apparatus comprises the aforesaid display screen, and a plurality of light sources, each of which is disposed adjacent to the rear side of the screen base and corresponds to a respective one of the bores. Each of the light sources includes at least two light emitting diodes that emit light of different colors. The light emitted by the light emitting diodes of each of the light sources propagate along the respective one of the bores.

Other features and advantages of the present invention will become apparent in the following detailed description of the preferred embodiments with reference to the accompanying drawings, of which:
Figure 1 is a schematic sectional view of a conventional back-projection display screen;
Figure 2 is a perspective view of a conventional display apparatus;
Figure 3 is a fragmentary schematic view of the conventional display apparatus of Figure 2;
Figure 4 is a fragmentary exploded perspective view of the first preferred embodiment of a display screen according to this invention;
Figure 5 is a schematic fragmentary sectional view of the display screen of the first preferred embodiment;
Figure 6 is a schematic fragmentary sectional view of the second preferred embodiment of a display screen according to this invention;
Figure 7 is a schematic fragmentary sectional view of the third preferred embodiment of a display screen according to this invention;
Figure 8 is a fragmentary exploded partly sectional schematic side view of a preferred embodiment of a display apparatus according to this invention;
Figure 9 is an exploded perspective view showing a taper rod and a light source of the display apparatus of Figure 8;
Figure 10 is a schematic front view of the display apparatus of Figure 8;
Figure 11 is a schematic front view of another preferred embodiment of a display apparatus according to this invention; and
Figure 12 is a schematic fragmentary sectional view of yet another preferred embodiment of a display apparatus according to this invention.

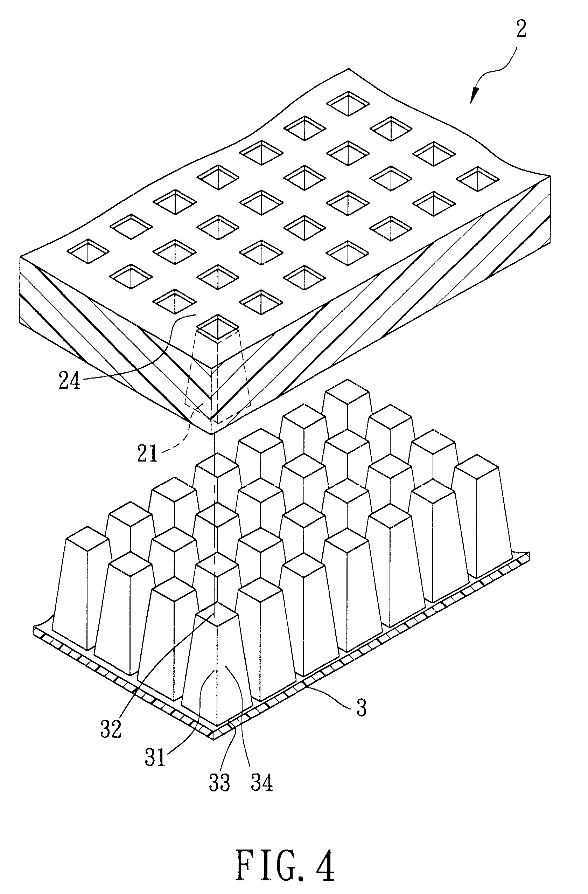

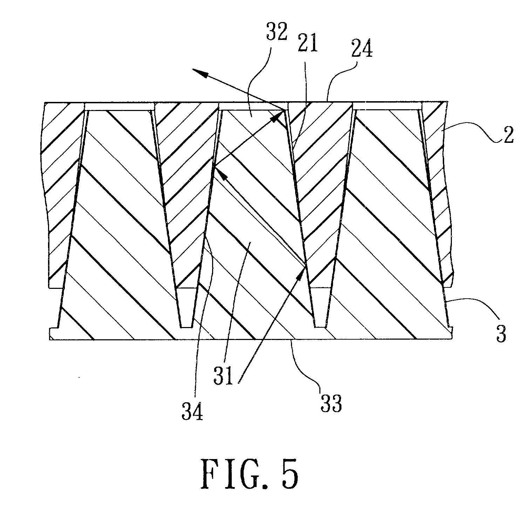

Referring to Figures 4 and 5, the first preferred embodiment of a display screen according to this invention is shown to comprise a screen base 2 and a light-guiding medium 3.

The screen base 2 has a front side, a rear side, and an array of bores 21 that extend from the rear side to the front side. Each of the bores 21 tapers in a direction from the rear side to the front side, and has a square cross-section. The front side of the screen base 2 is further provided with a black coating 24 for absorbing ambient light. In an alternative embodiment, the screen base 2 is made from black light-absorbing material so as to achieve the same effect.

In this embodiment, the light-guiding medium 3 is made of a light-transmitting transparent or semi-transparent material having a predetermined refractive index, and includes an array of taper rods 31. Each of the taper rods 31 is inserted into a respective one of the bores 21 from the rear side of the screen base 2. Each of the taper rods 31 has a front end portion 32 and a rear end portion 33, and tapers in a direction from the rear end portion 33 to the front end portion 32. Each of the taper rods 31 has a square cross-section to complement the respective one of the bores 21. Preferably, the rear end portions 33 of the taper rods 31 are interconnected and are disposed outwardly of the respective bores 21. The front end portions 32 of the taper rods 31 do not extend outwardly of the respective bores 21. In this embodiment, each of the taper rods 31 has an outer wall surface, i.e. the four lateral walls, provided with a metal coating to result in a light-reflective layer 34 at the interface of each taper rod 31 and the respective bore 21. When light is projected from the rear side of the screen base 2, the light enters the light-guiding medium 3 at the rear end portions 33 of the taper rods 31. Due to the light-reflective layer 34 on the outer wall surfaces of the taper rods 31, light is subjected to multiple total internal reflections as it propagates along the taper rods 31. The light exits the taper rods 31 at the front end portions 32 of the latter to result in an image that can be viewed from the front side of the screen base 2.

In one alternative embodiment, instead of providing the outer wall surfaces of the taper rods 31 with the metal coating that serves as the light-reflective layer 34, the metal coating can be provided on the inner wall surfaces of the bores 21 to achieve the same result.

In another alternative embodiment, instead of providing either of the outer wall surfaces of the taper rods 31 and the inner wall surfaces of the bores 21 with the metal coating, the light-reflective layer 34 can be formed as a filler layer between each of the taper rods 31 and the respective one of the bores 21. The filler layer has a refractive index smaller than that of the light-transmitting material used to form the light-guiding medium 3, thereby enabling light that propagates along the taper rods 31 to be subjected to multiple total internal reflections. Total internal reflection is a condition in that, when Snell laws of refraction are not satisfied, light that propagates in a medium of high-velocity will be totally reflected at a boundary of the high-velocity medium and a low-velocity medium. In other words, when light in a medium with a higher refractive index reaches a medium with a lower refractive index, if the incident angle is greater than a critical angle, the light will be completely reflected back into the medium with the higher refractive index. For example, in the aforesaid alternative embodiment, air can be present between each of the taper rods 31 and the respective one of the bores 21 to serve as the filler layer. The light-transmitting material for making the light-guiding medium 3 is then selected to have an appropriate refractive index for ensuring total internal reflection at the boundary of the filler layer and the respective taper rod 31.

As to the cross-sections of the bores 21 and the taper rods 31, it should be apparent to those skilled in the art that it is not intended to limit the same to a square. Other shapes, such as a circle, an oval or a rectangle, are available for use.

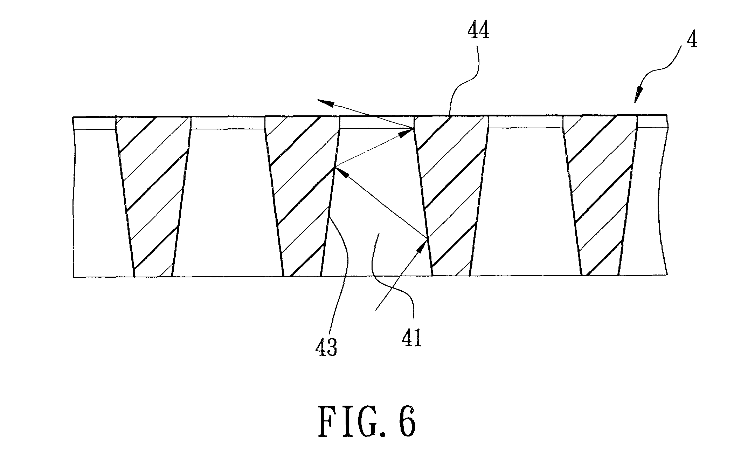

Referring to Figure 6, the second preferred embodiment of a display screen according to this invention is shown to comprise a screen base 4 having a front side, a rear side, and an array of bores 41 that extend from the rear side to the front side. Each of the bores 41 tapers in a direction from the rear side to the front side, and has a predetermined cross-section, such as a square, circle, oval or a rectangle. Each of the bores 41 has an inner wall surface provided with a metal coating that serves as a light-reflective layer 43. Like the previous embodiment, the front side of the screen base 4 is provided with a black coating 44 for absorbing ambient light. Alternatively, the screen base 4 can be made from black light-absorbing material to achieve the same effect.

When light is projected from the rear side of the screen base 4, the light enters the bores 41 and is subjected to multiple total internal reflections as it propagates along the bores 41 due to the presence of the light-reflective layer 43 on the inner wall surface of each of the bores 41. The light exits the screen base 4 to result in an image that can be viewed from the front side of the screen base 4.

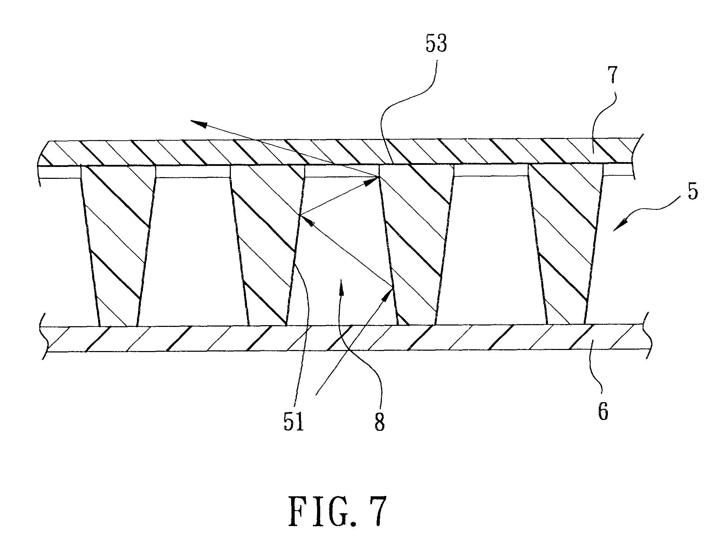

Referring to Figure 7, the third preferred embodiment of a display screen according to this invention is shown to comprise a screen base 5, a rear cover plate 6, a front cover plate 7, and a light-guiding medium 8.

The screen base 5 has a front side, a rear side, and an array of bores 51 that extend from the rear side to the front side. Each of the bores 51 tapers in a direction from the rear side to the front side, and has a predetermined cross-section, such as a square, circle, oval or a rectangle. Like the previous embodiments, the front side of the screen base 5 is provided with a black coating 53 for absorbing ambient light.

Each of the front and rear cover plates 7, 6 is a transparent plate that covers sealingly a respective one of the front and rear sides of the screen base 5, thereby covering front and rear ends of the bores 51.

In this embodiment, the light-guiding medium 8 fills each of the bores 51 and is made of a material with a refractive index larger than that of the material used for making the screen base 5 to allow multiple total internal reflections inside the bores 51. Particularly, when light enters the bores 51 via the rear cover plate 6, the light is subjected to multiple total internal reflections as it propagates along the bores 51. The light exits the screen base 5 to result in an image that can be viewed from the front cover plate 7.

Some of the advantages that can be attributed to the above-described display screen are as follows:
1. The brightness and the angle of view can be flexibly designed by varying the shape, size and density of the bores in the screen base.
2. Because light is subjected to multiple total internal reflections as it propagates along the bores in the screen base, random phase and random polarization occur to minimize the presence of speckle effect. In addition, because each pixel position of the screen can be configured to include a number of the bores, the occurrence of moiré effect can be minimized as well.
3. The sizes of the bores in the screen base can be varied throughout the display screen, such as by reducing the sizes of the bores from the central portion to the outer periphery of the projection screen, to provide compensation to the cosine θ attenuation of the light intensity distribution, thereby maintaining even brightness of an image throughout the display screen.
4. Because ambient light can be absorbed at the front side of the screen base, the contrast of the image viewed on the display screen can be increased.
5. The display screen of this invention has a relatively simple construction that permits manufacturing of the same at a relatively low cost.

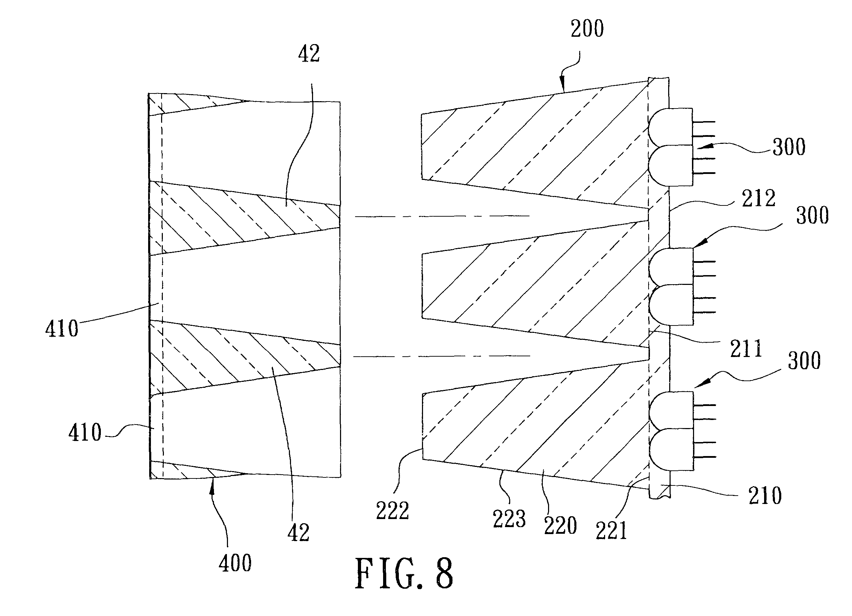

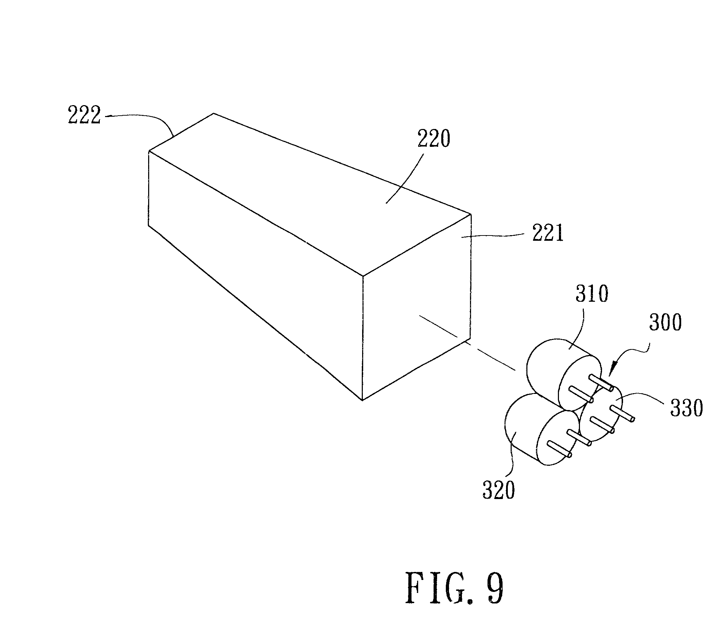

Referring now to Figures 8 and 9, a preferred embodiment of a display apparatus according to this invention is shown to comprise a display screen and a plurality of light sources 300. The display screen is generally similar to that shown in Figures 4 and 5, and includes a screen base 400 and a light-guiding medium 200.

The screen base 400 has a front side, a rear side, and an array of bores 410 that extend from the rear side to the front side. Each of the bores 410 tapers in a direction from the rear side to the front side, and has a square cross-section. The front side of the screen base 400 is further provided with a black coating for absorbing ambient light. In an alternative embodiment, the screen base 400 is made from black light-absorbing material so as to achieve the same effect.

The light-guiding medium 200 is made of a light-transmitting transparent or semi-transparent material having a predetermined refractive index, such as glass, and includes an array of solid taper rods 220. Each of the taper rods 220 is inserted into a respective one of the bores 410 from the rear side of the screen base 400. Each of the taper rods 220 has a front end portion 222 and a rear end portion 221, and tapers in a direction from the rear end portion 221 to the front end portion 222. Each of the taper rods 220 has a square cross-section to complement the respective one of the bores 410. In this embodiment, each of the taper rods 220 has an outer wall surface, i.e. the four lateral walls, provided with a metal coating to result in a light-reflective layer 223 at the interface of each taper rod 220 and the respective bore 410.

The light-guiding medium 200 is formed integrally with a base plate 210 having a front end face 211 and a rear end face 212. The rear end portions 221 of the taper rods 220 are connected integrally to the front end face 211 of the base plate 210.

Each of the light sources 300 is mounted on the base plate 210 such that the light radiated by the former can enter the rear end portions 221 of the taper rods 220. In this embodiment, each of the light sources 300 includes a first light emitting diode 310 for generating red light, a second light emitting diode 320 for generating blue light, and a third light emitting diode for generating green light. In the display apparatus of this invention, each of the light sources 300 is associated with a respective one of the taper rods 220 and forms a pixel of an image to be shown on the display screen. It should be apparent to one skilled in the art that the number of diodes that form each of the light sources 300 should not be limited to three, and can be as small as two and greater than three.

In use, as the light from the light-emitting diodes 310, 320, 330 enter the rear end portions 221 of the taper rods 220, due to the light-reflective layer 223 on the outer wall surfaces of the taper rods 220, the light are subjected to multiple total internal reflections as they propagate along the taper rods 220 and exit at the front end portions 222 of the taper rods 220. Thus, the taper rods 220 act as rod integrators that evenly mix the light from the diodes 310, 320, 330 to result in point-light sources radiating at the front end portions 222 of the taper rods 220. In other words, the mixture of the light from the diodes 310, 320, 330 is visible from the display apparatus of this invention, and not the individual diode outputs. The resolution of an image shown on the display apparatus of this invention is accordingly enhanced. In addition, because the area at the front end portions 222 of the taper rods 220 is smaller than that at the rear end portions 221, light exits from the taper rods 220 with a relatively high brightness. Therefore, in the display apparatus of the present invention, by varying the ratio of the areas at the front and rear end portions 222, 221 of the taper rods 220, the brightness of the display apparatus can be controlled.

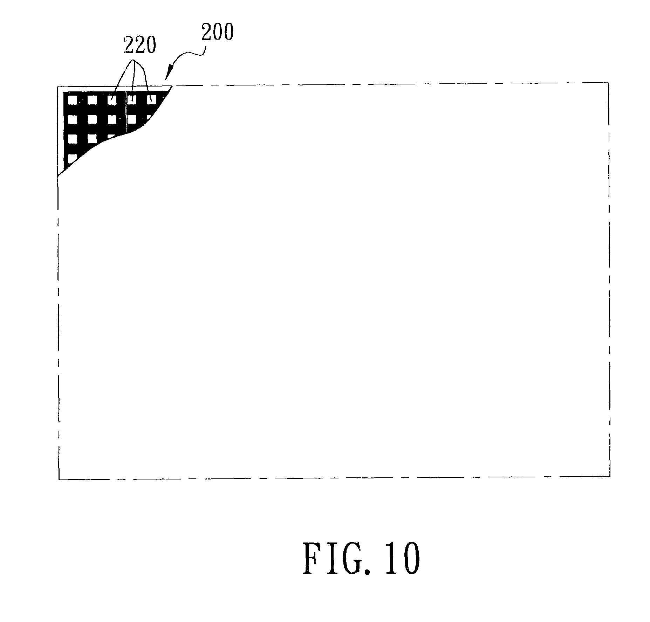

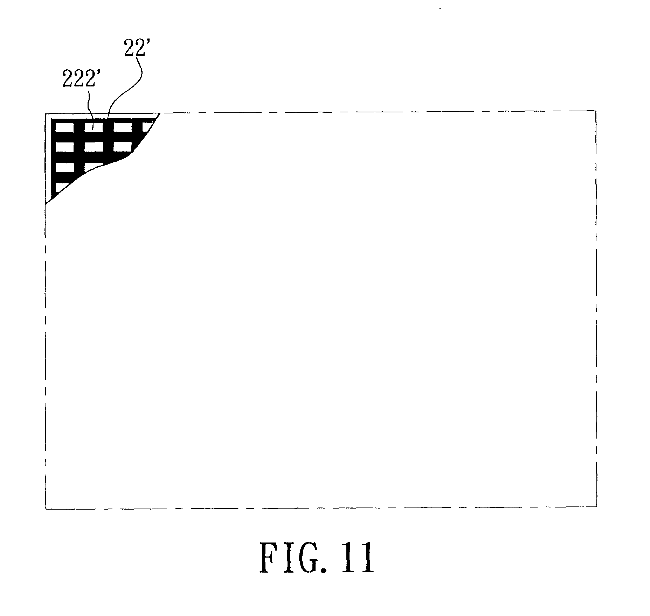

Aside from brightness control, the area at the front end portions 222 of the taper rods 220 can also be used to control the angle of view. With further reference to Figure 10, when the front end portions of the taper rods 220 of the light-guiding medium 200 have a square area, the angle of view remains substantially the same when viewed from the top, bottom, left or right sides. Referring to Figure 11, in another preferred embodiment of a display apparatus according to this invention, the front end portions of the taper rods 220' of the light-guiding medium 200' have a rectangular area with a length in the horizontal direction such that the angle of view is larger when viewed from the top or bottom sides than that when viewed from the left or right sides . Accordingly, when the front end portions of the taper rods of the light-guiding medium have a rectangular area with a length in the vertical direction, the angle of view will be larger when viewed from the left or right sides than that when viewed from the top or bottom sides . The area at the front end portions of the taper rods can be varied to have other shapes, such as a circle or an oval, for controlling the angle of view of the display apparatus.

Like the display screen of Figures 4 and 5, instead of providing the outer wall surfaces of the taper rods with the metal coating that serves as the light-reflective layer, the metal coating can be provided on the inner wall surfaces of the bores to achieve the same result. Moreover, instead of providing either of the outer wall surfaces of the taper rods and the inner wall surfaces of the bores with the metal coating, the light-reflective layer can be formed as a filler layer between each of the taper rods and the respective one of the bores. The filler layer has a refractive index smaller than that of the light-transmitting material used to form the light-guiding medium, thereby enabling light that propagates along the taper rods to be subjected to multiple total internal reflections.

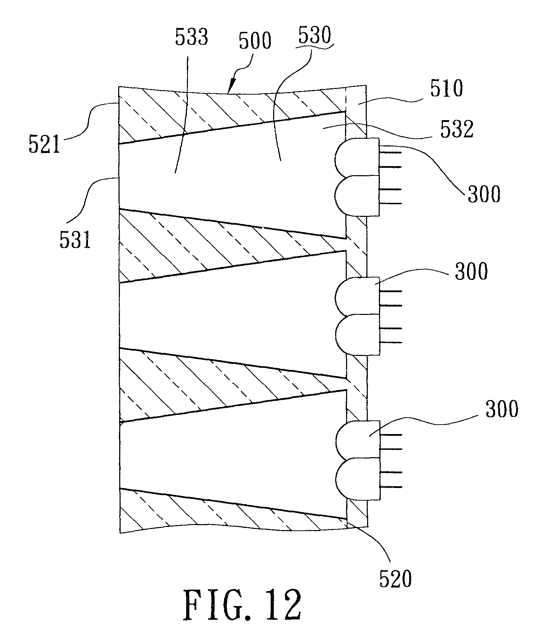

Referring to Figure 12, yet another preferred embodiment of a display apparatus according to this invention is shown to comprise a display screen that includes a screen base 500 having a front side 521, a rear side 520, and an array of bores 530 that extend from the rear side 520 to the front side 521. Each of the bores 530 has a front end portion 531 and a rear end portion 532, and tapers in a direction from the rear side 520 to the front side 521 of the screen base 500. Each of the bores 530 further has an inner wall surface provided with a metal coating that serves as a light-reflective layer 533. Like the embodiment of Figure 8, the front side 521 of the screen base 500 is provided with a black coating for absorbing ambient light. Alternatively, the screen base 500 can be made from black light-absorbing material to achieve the same effect.

A base plate 510 is formed integrally on the rear side 520 of the screen base 500. The display apparatus of this embodiment further includes a plurality of light sources 300 similar to those of the embodiment of Figure 8. Each of the light sources 300 is mounted on the base plate 510 such that the light radiated by the former can enter the rear end portions 532 of the bores 530.

In use, as the light from the light sources 300 enter the rear end portions 532 of the bores 530, due to the light-reflective layer 533 on the inner wall surfaces of the bores 530, the light are subjected to multiple total internal reflections as they propagate along the bores 530 and exit at the front end portions 531 of the bores 530. Thus, the bores 530 act as hollow pipe integrators that evenly mix the light from the diodes that form the light sources 300 to result in point-light sources radiating at the front end portions 531 of the bores 530.

Like the embodiment of Figure 8, the area at the front end portions 531 of the bores 530 should not be limited to a square in shape. Other shapes, such as a circle, an oval or a rectangle, can be used to control the brightness and angle of view of the display apparatus.

## Claims

1. A display screen, **characterized by**:
a screen base (2, 4) having a front side, a rear side, and an array of bores (21, 41) that extend from said rear side to said front side, each of said bores (21, 41) tapering in a direction from said rear side to said front side; and
reflecting means, disposed in said bores (21, 41), for subjecting light that enters said bores (21, 41) from said rear side of said screen base (2, 4) to multiple total internal reflections as the light propagates along said bores (21, 41) prior to exiting at said front side of said screen base (2, 4).

2. The display screen as claimed in Claim 1, **characterized in that** said front side of said screen base (2, 4) is provided with a black coating (24, 44) for absorbing ambient light.

3. The display screen as claimed in Claim 1, **characterized in that** said screen base (2, 4) is made from black light-absorbing material so as to permit absorption of ambient light at said front side of said screen base (2, 4).

4. The display screen as claimed in Claim 1, **characterized in that** said reflecting means comprises an array of taper rods (31), each of which is made of a light-transmitting material and is inserted into a respective one of said bores (21) from said rear side of said screen base (2), each of said taper rods (31) having a front end portion (32) and a rear end portion (33), and tapering in a direction from said rear end portion (33) to said front end portion (32).

5. The display screen as claimed in Claim 4, further **characterized in that** said reflecting means comprises a light-reflective layer (34) provided between each of said taper rods (31) and the respective one of said bores (21).

6. The display screen as claimed in Claim 5, further **characterized in that** said light-reflective layer (34) is a metal coating provided on an outer wall surface of each of said taper rods (31).

7. The display screen as claimed in Claim 5, further **characterized in that** said light-reflective layer is a metal coating provided on an inner wall surface of each of said bores (21).

8. The display screen as claimed in Claim 4, further **characterized in that** said light-transmitting material has a first refractive index, said reflecting means further comprising a filler layer that is provided between each of said taper rods (31) and the respective one of said bores (21) and that has a second refractive index smaller than the first refractive index.

9. The display screen as claimed in Claim 8, further **characterized in that** said filler layer is air.

10. The display screen as claimed in Claim 1, **characterized in that** said reflecting means comprises a metal coating provided on an inner wall surface of each of said bores (41) to serve as a light-reflective layer (43).

11. The display screen as claimed in Claim 1, further **characterized by** transparent front and rear cover plates (7, 6) that cover sealingly a respective one of said front and rear sides of said screen base (5) to cover front and rear ends of said bores (51).

12. The display screen as claimed in Claim 11, **characterized in that** said screen base (5) is made of a material with a first refractive index, and said reflecting means comprises a light-guiding medium (8) that fills each of said bores (51) and that has a second refractive index larger than the first refractive index.

13. A display apparatus **characterized by** a display screen according to Claim 1, and a plurality of light sources (300), each of which is disposed adjacent to said rear side of said screen base (400, 500) and corresponds to a respective one of said bores (410, 530), each of said light sources (300) including at least two light emitting diodes (310, 320, 330) that emit light of different colors, the light emitted by said light emitting diodes (310, 320, 330) of each of said light sources (300) propagating along the respective one of said bores (410, 530).

14. The display apparatus as claimed in Claim 13, **characterized in that** said reflecting means comprises an array of taper rods (220), each of which is made of a light-transmitting material and is inserted into a respective one of said bores (410) from said rear side of said screen base (400), each of said taper rods (220) having a front end portion (222) and a rear end portion (221), and tapering in a direction from said rear end portion (221) to said front end portion (222).

15. The display apparatus as claimed in Claim 14, further **characterized by** a base plate (210) having a front side connected integrally to said rear end portions (221) of said taper rods (220), said light sources (300) being mounted on said base plate (210).

16. The display apparatus as claimed in Claim 13, **characterized in that** said reflecting means comprises a metal coating provided on an inner wall surface of each of said bores (530) to serve as a light-reflective layer (533).

17. The display apparatus as claimed in Claim 16, further **characterized by** a base plate (510) having a front side connected integrally to said rear side (520) of said screen base (500), said light sources (300) being mounted on said base plate (510).
